# EUROPEAN PATENT APPLICATION

(11) **EP 4 489 286 A1**
(43) Date of publication of application: **08.01.2025**
(21) Application number: 24186151.7
(22) Date of filing: 03.07.2024
(51) Int. Cl.: H02M 3/335, B60L 1/00, B60L 3/00, B60L 58/20, H02J 7/34

(54) **POWER ELECTRONICS WITH INTEGRATED ULTRACAPACITOR ENERGY STORAGE**

(30) Priority: 07.07.2023 US 202363512604 P
(71) Applicant: Aptiv Technologies AG, 8200 Schaffhausen (CH)
(72) Inventor: MOORE, Stephen W., 8200 Schaffhausen (CH)
(74) Representative: Bardehle Pagenberg Partnerschaft mbB Patentanwälte Rechtsanwälte

(57) **Abstract**

A system includes a set of ultracapacitors, an input characterized by a first nominal voltage, an output characterized by a second nominal voltage, a direct current to direct current (DC-DC) converter, and switching power electronics electrically connected to the set of ultracapacitors. The DC-DC converter is configured to convert power from the input at the first nominal voltage to power at the output at the second nominal voltage. The DC-DC converter includes a magnetic coupling system that electromagnetically couples a first side of the DC-DC converter to a second side of the DC-DC converter. The magnetic coupling system electromagnetically couples the switching power electronics to the second side of the DC-DC converter.

## Description

### CROSS-REFERENCE TO RELATED APPLICATIONS

This application claims the benefit of U.S. Provisional Application No. 63/512,604 filed July 7, 2023, the entire disclosure of which is incorporated by reference.

### FIELD

The present disclosure relates to power electronics and more particularly to DC-DC power electronics with integrated energy storage.

### BACKGROUND

An ultracapacitor is an electrochemical energy storage device that acts similarly to a battery. Ultracapacitors differ from batteries in that ultracapacitors typically contain less energy storage by both weight and volume, ultracapacitors have greater power density, ultracapacitors exhibit significantly longer life (both calendar life and cycle life), and ultracapacitors follow the voltage characteristics according to the capacitor equation (specifically, *J* = ½ *CV*², where *J* is the energy stored, *C* is the capacitance, and V is the potential difference across the capacitor). An ultracapacitor (also called a supercapacitor) generally has a higher capacitance than a standard capacitor (such as an electrolytic capacitor). For example, the capacitance of an ultracapacitor may be 1, 2, or more orders of magnitude greater (for a given weight or volume) than a standard capacitor. In various implementations, an ultracapacitor may be based on an electrostatic doublelayer capacitor or an electrochemical pseudo capacitor.

Because of their properties compared with batteries, ultracapacitors are generally used for short-duration high-power long-life applications, while batteries are used for longer run-time energy-dense applications that are accepted to have shorter life. Ultracapacitors are therefore suitable for certain long-life applications where short-duration pulse power is required, such as airbags. In the case of a collision, the vehicle powernet may become inoperative due to damage to the engine (alternator), battery compartment, and/or fuse box. The ultracapacitor inside of the airbag unit stores enough electrical energy to deploy the airbag without relying on other energy sources, ensuring continued function even when the overall vehicle electrical system is damaged. The long-life characteristics of the ultracapacitor ensures the airbag is functional for the design life.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1A is a simplified block diagram of an example implementation of the present disclosure.
FIG. 1B is a simplified block diagram of an example implementation of the present disclosure.
FIG. 2 is a simplified functional block diagram of an example implementation of the present disclosure.
FIG. 3A is a simplified block diagram of a first example implementation of a synchronous rectifier.
FIG. 3B is a simplified block diagram of a second example implementation of a synchronous rectifier.

In the drawings, reference numbers may be reused to identify similar and/or identical elements.

### DETAILED DESCRIPTION

### INTRODUCTION

A typical low-voltage vehicle powernet is 12 volts (12V). Some vehicles also incorporate a higher-voltage (such as 48V) powernet. Traditional vehicles derive the 12V energy from an alternator on the engine, buffered by a 12V battery that is typically located in the engine compartment (which itself is often under the hood of the vehicle). Electrification of vehicles increases the need for highly reliable electrical power. Some examples include electrically activated anti-lock brakes, drive-by-wire braking, electrically activated emergency parking brakes, electrically activated door locks, and drive-by-wire steering. Other applications include soft-shutdown of CPUs in case of power loss and "phone-home" emergency GPS transponders.

Battery electric vehicles (BEV) and hybrid electric vehicles (HEV) have a large battery pack that is used in conjunction with an electric motor to provide traction power (propulsion) to the vehicle. To provide sufficient power for propulsion, the battery pack may output a high voltage (for example, greater than 48V and, in various implementations, greater than 100V, 200V, 600V, 750V, or 1000V). This voltage is protected using specialized wire, connectors, and interfaces. The high voltage is constrained to the fewest possible uses, such as the propulsion motor, air conditioning compressor, and power steering assist. The rest of the vehicle uses the low-voltage 12V and/or 48V powernets. The 12V powernet in these cases is powered by a DC-DC converter that inputs power from the high-voltage battery pack and outputs 12V for the low-voltage vehicle powernet.

### ULTRACAPACITOR

The present disclosure describes a system for achieving energy storage via a set of ultracapacitors. The set of ultracapacitors includes one or more ultracapacitors. When the set includes multiple ultracapacitors, the ultracapacitors may be electrically arranged in series, parallel, or a combination of series and parallel. A set (or network) of ultracapacitors with a total capacitance (C) can be abstracted and simplified to a single ultracapacitor (C).

A simplified DC-DC converter can be envisioned as a high-voltage direct current (HVDC) input feeding a switching device that breaks the DC voltage into a series of pulses. The switching device may be referred to as a chopper and may be implemented using an "H-bridge" formed from transistors, such as metal-oxide semiconductor field effect transistors (MOSFETs) and/or insulated gate bipolar transistors (IGBTs). In an H-bridge, a first pair of switches respectively connects two input terminals to one output terminal, and another pair of switches respectively connects the two input terminals to another output terminal. Within each pair of switches, the switches are controlled oppositely (one is open when the other is closed) so that the two input terminals are not shorted together.

The pulses are fed into a transformer primary with a specified winding ratio that results in a desired voltage on the secondary. The output waveform (from the secondary) is rectified to create the desired low-voltage output, such as 12V or 48V. In some implementations, the low-voltage output is approximately 12V or 48V (in various implementations, approximately means within 20% above or below these values). The rectification may be performed using, for example, diodes and/or synchronously switching transistors. The output can be modulated based on output voltage, current, and/or power demands by adjusting the pulse modulation in the input chopper.

The loss of the high-voltage supply would cause a near-immediate loss of the low-voltage powernet. Loss of the high-voltage supply can occur as a result of cell failure in the battery pack, wire harness failure, connector failure, physical damage, etc. As another example, a failure of the DC-DC converter would also result in loss of the low-voltage powernet. According to the present disclosure, a set of ultracapacitors can be used to store energy while the high-voltage powernet and DC-DC converter is functioning and, in the case of their failure, supply - at least temporarily - energy to the low-voltage powernet.

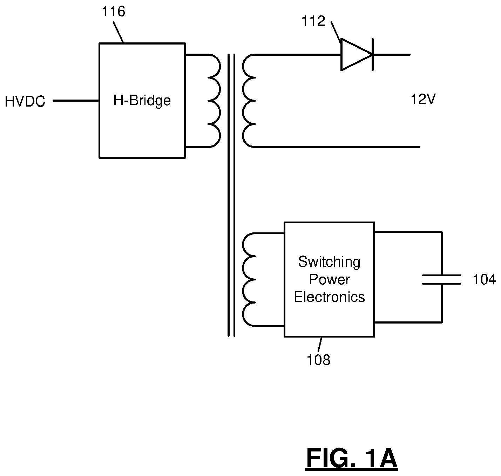

In an example implementation shown in FIG. 1A, an HVDC input is chopped (for example, by an H-bridge 116) into an alternating waveform, the output of which is connected to a transformer primary winding. The transformer secondary winding is connected to a rectifier, which is represented in FIG. 1A by a single diode 112. The output of the rectifier is low-voltage (for example, 12V) power.

Another secondary winding is located on the shared transformer core and is connected through switching power electronics 108 (for example, an H-bridge) to a set of ultracapacitors 104. This arrangement gives the set of ultracapacitors 104 bi-directional capability to monitor and control the bus voltage. In case of high-voltage failure, the set of ultracapacitors 104 can power the rectifier, and therefore the low-voltage powernet, until the set of ultracapacitors 104 is depleted. In various implementations, the additional winding on the shared transformer may impact efficiency.

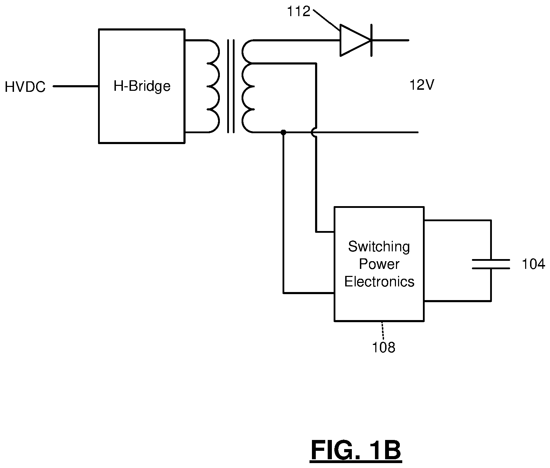

In various implementations, one or more windings of a transformer (for example, the transformer primary and/or transformer secondary) may be implemented by an autoformer or other type of magnetic electrical component. For example, as shown in FIG. 1B, an autoformer relies on two windings, one with multiple taps, to magnetically couple the H-bridge 116, the diode 112, and the switching power electronics 108.

### BIDIRECTIONAL CONVERTER

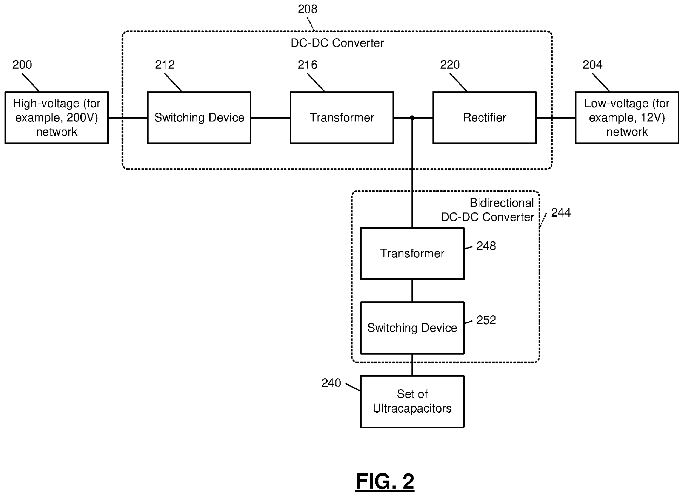

In another example implementation shown in FIG. 2, a high-voltage network 200 provides power to a low-voltage network 204 through a DC-DC converter 208. For example, the DC-DC converter 208 may include a switching device 212, such as an H-bridge, that chops the DC of the high-voltage network 200 into pulsating DC. The pulsating DC is provided to a transformer 216 that steps down the voltage and provides the stepped-down pulsating DC to a rectifier 220. For example only, the rectifier 220 may include diodes and/or switching transistors. In various implementations, the transformer 216 may be coupled to the transformer 248. For example, one or more windings of the transformer 216 and the transformer 248 may be wrapped around a common core.

The output of the DC-DC converter 208 is fed to an ultracapacitor bank 240 - that is, a set ultracapacitors connected in parallel and/or series - through a bidirectional DC-DC converter 244. The bidirectional DC-DC converter 244 can provide power to the ultracapacitor bank 240 when the high-voltage network 200 and the DC-DC converter 208 are functioning; when either stops functioning, the bidirectional DC-DC converter 244 can provide energy from the ultracapacitor bank 240 to the low-voltage network 204. In various implementations, the bidirectional DC-DC converter 244 includes a transformer 248 and a switching device 252. The transformer 248 may be dedicated - that is, not sharing a core in common with the transformer 216 - or may include a winding electromagnetically coupled to the transformer 216 (such as wrapping around some or all of the core of the transformer 216).

### SYNCHRONOUS RECTIFICATION

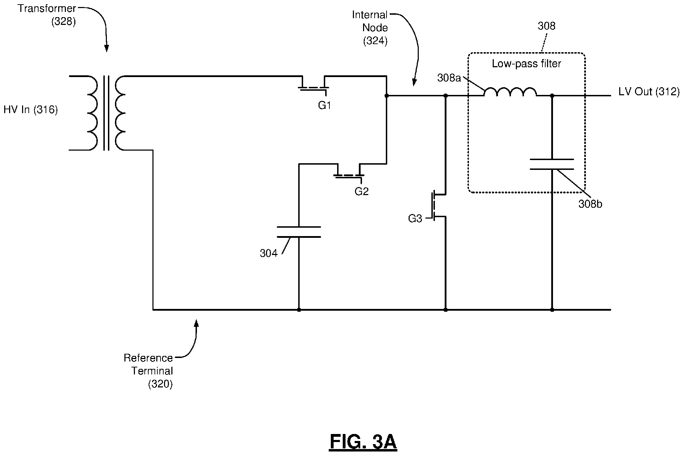

In another example implementation shown in FIG. 3A, a set of ultracapacitors 304 is integrated directly into the synchronous rectification of the 12V output (the low voltage output - LV Out 312). In this manner, the set of ultracapacitors 304 can either charge or discharge, depending on the synchronous switching of transistors G1, G2, and G3. In case of high-voltage failure, the set of ultracapacitors 304 can discharge into the 12V output via switching of G2 and G3.

In FIG. 3A, HV In 316 is connected to a first winding of a transformer 328. A second winding of the transformer 328 is connected to G1 and reference terminal 320. G1, G2, and G3 are connected to internal node 324. G2 is connected to the set of ultracapacitors 304.

When charging the set of ultracapacitors 304, the high voltage (HV In 316) is rectified by G1 and routed into the set of ultracapacitors 304 using G2 synchronously with G1. When discharging the set of ultracapacitors, the set of ultracapacitors is switched into the inductor 308a (connected to internal node 304 and LV out 312) using G2 asynchronously with G1. In case of high-voltage failure, G1 is disabled and the set of ultracapacitors is switched into the inductor using G2.

The output of transistors G1 and G2 may be smoothed to generate lowripple DC by a low-pass filter 308 formed by an inductor 308a and a capacitor 308b arranged in series. In various implementations, the capacitor 308b is not an ultracapacitor.

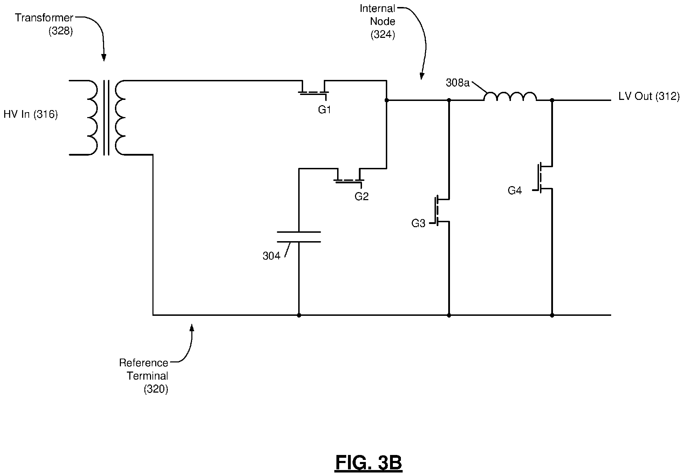

FIG. 3A is only one example of a simplified rectifier topology. Rectification can be achieved by a variety topologies. For example, in FIG. 3B, another simplified schematic shows a synchronous rectifier in which the capacitor 308b of FIG. 3A is replaced by transistor G4. When transistor G2 and transistor G4 are activated, a loop forms that builds magnetic field in the inductor. When G4 is deactivated, the magnetic field of the inductor 308a dissipates into LV Out 312. This unique arrangement allows for synchronous rectification as well as boost conversion from the set of ultracapacitors 304. This allows the set of ultracapacitors 304 to power LV Out 312 even when the voltage across the set of ultracapacitors 304 is less than the nominal voltage of LV Out 312.

### CONCLUSION

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

As noted below, the term "set" generally means a grouping of one or more elements. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. In various implementations, a subset of the first set is not necessarily a proper subset: in certain circumstances, the subset may be coextensive with (equal to) the first set (in other words, the subset may include the same elements as the first set). In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" can be replaced with the term "controller" or the term "circuit." In this application, the term "controller" can be replaced with the term "module." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); processor hardware (shared, dedicated, or group) that executes code; memory hardware (shared, dedicated, or group) that is coupled with the processor hardware and stores code executed by the processor hardware; other suitable hardware components that provide the described functionality; or a combination of some or all of the above, such as in a system-on-chip.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2020 (also known as the WIFI wireless networking standard) and IEEE Standard 802.3-2018 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

The memory hardware may also store data together with or separate from the code. Shared memory hardware encompasses a single memory device that stores some or all code from multiple modules. One example of shared memory hardware may be level 1 cache on or near a microprocessor die, which may store code from multiple modules. Another example of shared memory hardware may be persistent storage, such as a solid state drive (SSD) or magnetic hard disk drive (HDD), which may store code from multiple modules. Group memory hardware encompasses a memory device that, in combination with other memory devices, stores some or all code from one or more modules. One example of group memory hardware is a storage area network (SAN), which may store code of a particular module across multiple physical devices. Another example of group memory hardware is random access memory of each of a set of servers that, in combination, store code of a particular module. The term memory hardware is a subset of the term computer-readable medium.

The apparatuses and methods described in this application may be partially or fully implemented by a special-purpose computer created by configuring a general-purpose computer to execute one or more particular functions embodied in computer programs. Such apparatuses and methods may be described as computerized or computer-implemented apparatuses and methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special-purpose computer, device drivers that interact with particular devices of the special-purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java^{®}, Fortran, Perl, Pascal, Curl, OCaml, JavaScript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

The term non-transitory computer-readable medium does not encompass transitory electrical or electromagnetic signals propagating through a medium (such as on a carrier wave). Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The term "set" generally means a grouping of one or more elements. The elements of a set do not necessarily need to have any characteristics in common or otherwise belong together. The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

In the following further embodiments are described to facilitate understanding of the invention:
Embodiment 1. A system comprising:
   a set of ultracapacitors;
   an input characterized by a first nominal voltage;
   an output characterized by a second nominal voltage;
   a direct current to direct current (DC-DC) converter configured to convert power from the input at the first nominal voltage to power at the output at the second nominal voltage; and
   switching power electronics electrically connected to the set of ultracapacitors,
   wherein the DC-DC converter includes a magnetic coupling system that electromagnetically couples a first side of the DC-DC converter to a second side of the DC-DC converter, and
   wherein the magnetic coupling system electromagnetically couples the switching power electronics to the second side of the DC-DC converter.
Embodiment 2. The system of Embodiment 1 wherein the magnetic coupling system includes:
   a first winding electrically connected to the first side of the DC-DC converter; and
   a second winding electrically connected to the second side of the DC-DC converter,
   wherein the first winding and the second winding are wrapped around a core.
Embodiment 3. The system of Embodiment 1 or 2 wherein the second winding includes a tap electrically connected to the switching power electronics.
Embodiment 4. The system of Embodiment 2 or 3 wherein:
   the magnetic coupling system includes a third winding electrically connected to the switching power electronics, and
   the third winding is wrapped around the core.
Embodiment 5. The system of any one of the preceding Embodiments wherein the DC-DC converter includes a switching device configured to convert the first nominal voltage into pulsating DC.
Embodiment 6. The system of Embodiment 5 wherein the switching device includes an H-bridge.
Embodiment 7. The system of any one of the preceding Embodiments wherein the DC-DC converter includes a rectification device configured to convert pulsating DC into the second nominal voltage.
Embodiment 8. The system of any one of the preceding Embodiments wherein:
   the first nominal voltage is greater than 100 Volts; and
   the second nominal voltage is one of approximately 12 Volts and approximately 48 Volts.
Embodiment 9. The system of any one of the preceding Embodiments wherein the switching power electronics include an H-bridge.
Embodiment 10. The system of any one of the preceding Embodiments wherein the set of ultracapacitors includes a plurality of ultracapacitors connected in series and/or parallel.
Embodiment 11. The system of any one of the preceding Embodiments further comprising a second DC-DC converter configured to:
   in a first operating mode, provide power from the second side of the DC-DC converter to the set of ultracapacitors, and
   in a second operating mode, provide power from the set of ultracapacitors to the second side of the DC-DC converter.
Embodiment 12. The system of Embodiment 11 wherein the second side of the DC-DC converter includes a rectifier connected to the output.
Embodiment 13. The system of Embodiment 11 or 12 wherein:
   the magnetic coupling system includes a first transformer having a first core,
   the magnetic coupling system includes a second transformer having a second core,
   the first core and the second core are separate, and
   the second transformer is connected between the second side of the DC-DC converter and the set of ultracapacitors.
Embodiment 14. The system of Embodiment 13 further comprising a switching device that is connected between the second transformer and the set of ultracapacitors.
Embodiment 15. A system comprising:
   a set of ultracapacitors;
   a first switching device including (i) a first terminal connected to an internal node and (ii) a second terminal;
   a second switching device connected between the internal node and the set of ultracapacitors;
   a third switching device connected between the internal node and a reference terminal;
   a magnetic coupling system configured to electromagnetically couple an input to the second terminal of the first switching device and the reference terminal; and
   an inductive device connected between the internal node and an output, wherein:
      the input is characterized by a first nominal voltage, and
      the output characterized by a second nominal voltage.
Embodiment 16. The system of Embodiment 15 wherein:
   the magnetic coupling system includes a transformer,
   a first winding of the transformer is connected to the input, and
   a second winding of the transformer is connected between the second terminal of the first switching device and the reference terminal.
Embodiment 17. The system of Embodiment 15 or 16 further comprising a fourth switching device connected across the output.
Embodiment 18. The system of Embodiment 17 wherein:
   the first switching device includes a transistor,
   the second switching device includes a transistor,
   the third switching device includes a transistor, and
   the fourth switching device includes a transistor.
Embodiment 19. The system of any one of the preceding Embodiments 15 to 18 wherein:
   the first nominal voltage is greater than 100 Volts, and
   the second nominal voltage is one of approximately 12 Volts and approximately 48 Volts.
Embodiment 20. The system of any one of the preceding Embodiments 15 to 19 wherein the set of ultracapacitors includes a plurality of ultracapacitors connected in parallel and/or series.

## Claims

1. A system comprising:
a set of ultracapacitors (104; 240; 304);
an input **characterized by** a first nominal voltage;
an output **characterized by** a second nominal voltage;
a direct current to direct current (DC-DC) converter (208) configured to convert power from the input at the first nominal voltage to power at the output at the second nominal voltage; and
switching power electronics (108) electrically connected to the set of ultracapacitors (104; 304),
wherein the DC-DC converter (208) includes a magnetic coupling system that electromagnetically couples a first side of the DC-DC converter to a second side of the DC-DC converter, and
wherein the magnetic coupling system electromagnetically couples the switching power electronics to the second side of the DC-DC converter.

2. The system of claim 1 wherein the magnetic coupling system includes:
a first winding electrically connected to the first side of the DC-DC converter; and
a second winding electrically connected to the second side of the DC-DC converter,
wherein the first winding and the second winding are wrapped around a core.

3. The system of claim 2 wherein the second winding includes a tap electrically connected to the switching power electronics (108).

4. The system of claim 2 or 3 wherein:
the magnetic coupling system includes a third winding electrically connected to the switching power electronics (108), and
the third winding is wrapped around the core.

5. The system of any one of the preceding claims, wherein the DC-DC converter (208) includes a switching device configured to convert the first nominal voltage into pulsating DC, preferably
wherein the switching device includes an H-bridge.

6. The system of any one of the preceding claims, wherein the DC-DC converter (208) includes a rectification device configured to convert pulsating DC into the second nominal voltage.

7. The system of any one of the preceding claims, wherein:
the first nominal voltage is greater than 100 Volts; and
the second nominal voltage is one of approximately 12 Volts and approximately 48 Volts.

8. The system of any one of the preceding claims, wherein the switching power electronics include an H-bridge.

9. The system of any one of the preceding claims, wherein the set of ultracapacitors includes a plurality of ultracapacitors connected in series and/or parallel.

10. The system of any one of the preceding claims, further comprising a second DC-DC converter (244) configured to:
in a first operating mode, provide power from the second side of the DC-DC converter (208) to the set of ultracapacitors (240), and
in a second operating mode, provide power from the set of ultracapacitors (240) to the second side of the DC-DC converter (208), preferably wherein the second side of the DC-DC converter (208) includes a rectifier connected to the output.

11. The system of claim 10 wherein:
the magnetic coupling system includes a first transformer (216) having a first core,
the magnetic coupling system includes a second transformer (248) having a second core,
the first core and the second core are separate, and
the second transformer (248) is connected between the second side of the DC-DC converter (208) and the set of ultracapacitors (240), preferably further comprising a switching device (252) that is connected between the second transformer (248) and the set of ultracapacitors (240).

12. A system comprising:
a set of ultracapacitors;
a first switching device including (i) a first terminal connected to an internal node and (ii) a second terminal;
a second switching device connected between the internal node and the set of ultracapacitors;
a third switching device connected between the internal node and a reference terminal;
a magnetic coupling system configured to electromagnetically couple an input to the second terminal of the first switching device and the reference terminal; and
an inductive device connected between the internal node and an output, wherein:
the input is **characterized by** a first nominal voltage, and
the output **characterized by** a second nominal voltage.

13. The system of claim 12 wherein:
the magnetic coupling system includes a transformer,
a first winding of the transformer is connected to the input, and
a second winding of the transformer is connected between the second terminal of the first switching device and the reference terminal.

14. The system of claim 12 or 13 further comprising a fourth switching device connected across the output, wherein preferably:
the first switching device includes a transistor,
the second switching device includes a transistor,
the third switching device includes a transistor, and
the fourth switching device includes a transistor.

15. The system of any one of claims 12 to 14 wherein:
the first nominal voltage is greater than 100 Volts, and
the second nominal voltage is one of approximately 12 Volts and approximately 48 Volts; and/or wherein the set of ultracapacitors includes a plurality of ultracapacitors connected in parallel and/or series.
